Europäisches Patentamt

European Patent Office

Office européen des brevets

(11) Publication number: **0 296 520**
**A2**

## EUROPEAN PATENT APPLICATION

(21) Application number: 88109785.1

(22) Date of filing: 20.06.88

(51) Int. Cl.4: **A61C 19/04 , A61B 5/10**

(30) Priority: 22.06.87 US 65236

(43) Date of publication of application:
28.12.88 Bulletin 88/52

(84) Designated Contracting States:
AT BE CH DE ES FR GB GR IT LI LU NL SE

(71) Applicant: DENTSPLY INTERNATIONAL, INC.
570 West College Avenue P.O. Box 872
York Pennsylvania 17405(US)

(72) Inventor: Rzewinski, Leonard
20 Willow Road
New Heyde Park, NY 11040(US)
Inventor: Perdreaux, René J.
11-91 E. 34th Street
Brooklyn, NY 11210(US)
Inventor: Warrin, George E.
914 Madison Place
N. Merrick, NY 11566(US)
Inventor: Paschke, Richard H.
61 Pennsylvania Avenue
Medford, NY 11763(US)

(74) Representative: Wächtershäuser, Günter, Dr.
Tal 29
D-8000 München 2(DE)

(54) Recording perio probe.

(57) An apparatus for measuring the depth of a periodontal recess is provided. The apparatus comprises a hand held sheath having biasing means and a probe tip assembly associated therewith. The biasing means contacts and biases the probe tip toward one end of the sheath so that the probe tip extends from the sheath. When a measurement is made, the probe tip is pushed into the sheath and the motion of the probe tip is translated through connecting means to a device for measuring the movement of the probe tip. The measuring device is connected with means for automatically recording the measurements obtained. A method is also provided in which possible sites for measurement are preprogrammed, and interactive means are provided which permit the operator to choose the sites for measurement from among the preprogrammed sites in any order. A printout may be provided which correlates the measurements made with parameters identifying the site chosen for measurement.

## PERIO PROBE TIPS

### BACKGROUND OF THE INVENTION

This application is a continuation-in-part of copending SN 065,236 filed June 22, 1987, having the same assignee.

The present invention relates to a gingival sulci depth indicator used by dentists. Such probes, or similar probes, may also be applied to other dental areas such as measuring the depth or length of a root canal.

### BACKGROUND

The gingival sulci are the spaces between the gingival tissues (gums) and the teeth. The depth of the gingival sulci is usually measured from the margin of the gingiva (top of the gum) to the epithelial attachment (point where the gum attaches to the tooth). In the two most common diseases of the gums and teeth supporting structures, gingivitis (inflammation of the gums) and advanced periodontal disease (sometimes called pyorrhea), the gums become swollen and begin to stand away from the teeth. Advanced periodontal disease has been estimated to cause more adult tooth loss than the more common dental caries (cavities). The most effective protection against gingivitis and advanced periodontal disease is early detection of any change in the gingival sulci by the periodical measurement and recordation of the sulcus depths at various locations around each tooth.

A number of probes are available in the art for making this kind of measurement. A common instrument in the art comprises a handle with a fixed protruding sheath and a probe tip extending through the sheath, said probe tip being attached either directly to a mechanical indicator or indirectly, through wires, to a current indicating device on the probe handle. The major disadvantage of the prior art probe is that, to measure a sulcus depth, the sheath of the probe is rested on the margin of the gingiva while the probe tip is extended into the sulcus until it reaches the epithelial attachment. In the use of such a probe, the probe tip is not visible to the dentist as it is extended into the sulci and if extended too far, may inadvertently tear or penetrate the epithelial attachment. In addition, since the depth of the measurement is indicated on the probe handle itself, the dentist must either measure and then record the individual measurements himself, or employ an assistant to record the measurements as the dentist calls them out.

In every type of periodontal measuring instrument there is a need to apply a low, constant controlled force to the probe tip. If the force applied is too strong, the inflamed gingival attachment might be physically separated from the tooth, and if a too low force is applied, the probe tip might not extend to the base of the periodontal pocket.

In another embodiment of a perio probe, which is known in the prior art, a probe of fixed length is used, and the probe is associated with a movable sleeve, and the motion of the sleeve relative to the probe is used to indicate the depth of the gingival sulcus and measurements are recorded when the operator trips a foot switch. Although an improvement over other probes in the prior art, the operator, since the probe has a fixed length, must still be careful not to penetrate the epithelial attachment. The operator must also be careful to be sure that the sleeve is at a position which provides maximum probe tip exposure before a measurement is taken. If a recording device is attached, one must make sure that measurements are taken in a preset order so that the numbers recorded can be correlated to a specific measurement. If measurements are taken out of order, the entire sequence may have to be discarded and procedures repeated since no correlation can be made between the measurements taken and the position of the measurement.

Prior art devices also have to be calibrated periodically and such calibration is time consuming since calibration must be obtained when the probe tip with respect to the sheath is fully extended; the digital display reset; and a calibration made with the probe tip depressed with respect to the sheath. The procedure must then be repeated until a consistent reading is obtained at both positions. In the prior art devices, calibration desirably is made each time a probe tip is changed. In some prior art devices, when a calibration is made in the middle of a measurement sequence, all obtained data is lost.

Accordingly, there is a need in the art to provide a probe tip assembly for providing smooth measuring using an adjustable probing force, that is self-calibrating and provides accurate measurements; has a probe tip that is extended when probing for a pocket bottom and said probe tip is held in an extended position by a low reproducible force wherein measurements are made by pressing the probe tip assembly toward a pocket bottom and the probe tip retracts into the probe tip assembly when the pressing force exceeds the biasing force in the probe assembly, thereby reducing the chances of penetrating the epithelial attachment; and can be used to measure and record pocket depths in any order, has a graphic display panel that provides an uncomplicated working environment, and provides automatic recording of depths.

It is an object of the present invention to provide a disposable probe tip assembly for a perioprobe.

## SUMMARY OF THE INVENTION

The present invention is directed to an apparatus for measuring and recording the depth of an anatomical recess, specifically a dental recess. The apparatus comprises an optical housing, a sheath, biasing means, and an elongated substantially rigid probe tip which is biased substantially at one end of the sheath. The probe tip is movable relative to and within the sheath and extends from one end of the sheath. The biasing means is a spring within the optical housing which acts through various intermediate structures to provide a small but constant indirect pressure on the probe element within the sheath, which causes the probe element to extend from the sheath. The pressure within the optical housing is of such a low value that the probe tip retracts easily when tissue is touched during a measurement, which helps minimize the possibility of injury to the tissue. The assembly embracing the probe tip is adapted to be easily removable from the optical housing.

The present invention, because the probe tip is maintained in low pressure contact with a freely moveable connecting means, provides a smooth and relatively safe measurement because when the probe tip contacts epithelial tissue, the tip retracts easily into the sheath. The probe assembly is self-calibrating and provides accurate measurements. The probe assembly can be used to measure and record dental pocket depths in any order, thereby reducing chairside time for the practitioner since only diseased areas need be measured, and reducing the chances of error since software correlates measurements taken with the sites chosen for measurement.

## BRIEF DESCRIPTION OF THE DRAWINGS

Fig. 1 is a cut-a-way side view of a hand piece of the invention including the measuring apparatus.

Fig. 2 is a side view of an illustrative probe tip assembly of the invention.

Fig. 3 is a side view of an alternative embodiment of the probe tip assembly of the invention.

Fig. 4 is a cross section through line 4-4 of the measuring apparatus of the invention.

Fig. 5 is a perspective cut-a-way view of a slide of the invention with light source and light receiving means.

Fig. 6 illustrates a slide of the invention having transparent bands with alternate bands having various degrees of opacity.

Fig. 7 illustrates an alternative embodiment of a perioprobe of the invention.

Fig. 8 illustrates an embodiment of a probe tip assembly.

Fig. 9 illustrates an embodiment of means for attaching a probe tip assembly to a handpiece.

Fig. 10 illustrates an alternative embodiment of means for attaching a probe tip assembly to a handpiece.

Fig. 11 illustrates the apparatus of the invention including the microprocessor, display and input devices, the probe device and a printer.

Fig. 12 illustrates a printout of the display with exemplary measurements.

## DESCRIPTION OF THE PREFERRED EMBODIMENT

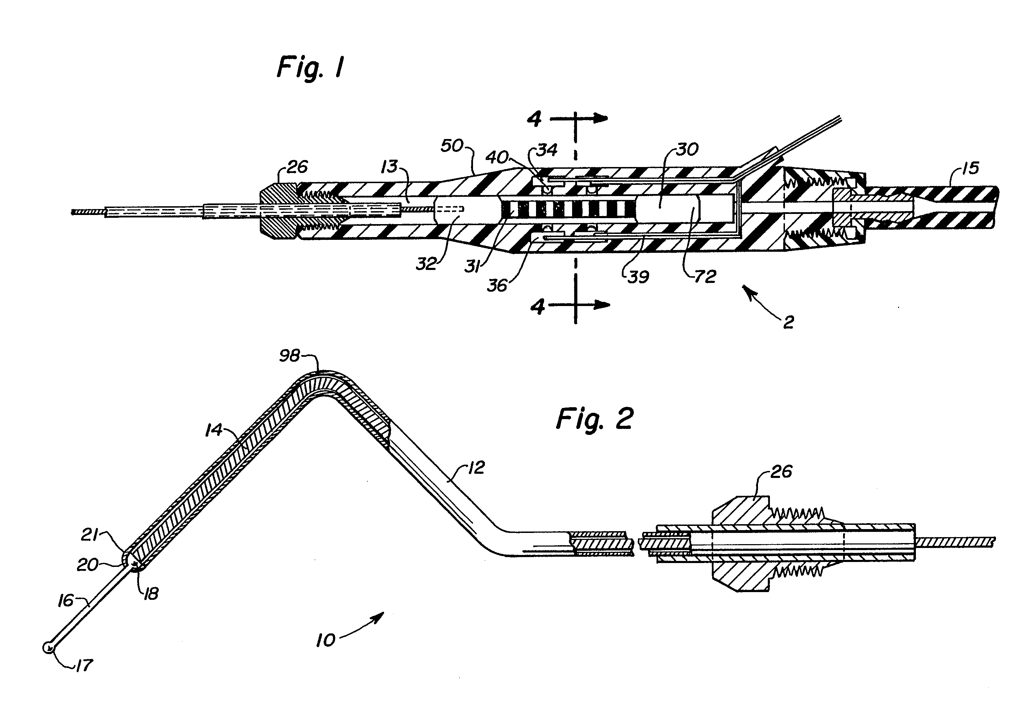

Referring now to Figs. 1 and 2, in the illustrated embodiment of the invention, handpiece 2 comprises probe tip assembly 10 which comprises hollow tubular sheath 12 which passes through collet 26 and is in communication with hole or shaft 13 in handpiece 2. Shaft 13 is also in communication with air hose 15 which is attached to the end of handpiece 2 distal from probe tip assembly 10. Within shaft 13 are slide carrier 30 which comprises air driven piston 72, slide 31 and abutting means 32. Handpiece 2 also includes optical housing 50 which contains at least one light source means 34 and a light receiving means 36.

Referring now to Fig. 2, the probe assembly 10 comprises an elongated tubular sheath 12, an elongated probe tip 16 which fits into the end of sheath 12 and extends outwardly therefrom, a connecting member 14 which slides freely within sheath 12 and provides direct or indirect contact between slide 31 and probe tip 16, and collet 26 which fits on sheath 12 and is adapted to attach probe assembly 10 to hand piece 2. In the embodiment illustrated in Fig. 2, the probe tip 16 is captured within sheath 12 by providing probe tip 16 with enlarged end or bulb 18 and by shaping sheath 12 by swaging or crimping its end 21 with radius 20 to partially encircle or capture bulb 18. In addition, in a preferred embodiment, bulb 18 may have an extension (not shown) which is attached to inner diameter of connector 14 to assure optimum contact between connector 14 and probe tip 16. In an alternative embodiment, bulb 18 may contact but need not be connected to connector 14.

As used herein, contact can be either an abutting relationship or a connected relationship. Contact embraces indirect contact where at least one additional part may be between parts that have a translational relationship.

In the preferred embodiment, connector 14 will be a coiled extension spring or helix in which the coils are tight against one another so that there is no compression in the spring. The coils, however, are easily flexed which makes it possible for connector 14 to easily negotiate a bend or gooseneck in sheath 12, said bend or gooseneck being desirable for adapting the probe of the invention for use as a perio probe to be used for measuring anatomical recessions in the mouth. Said construction substantially reduces the friction between connector 14 and sheath 12 and connector 14 moves very easily in sheath 12 when a measurement is made.

Bulb 18 has a diameter which approximates, but is slightly less than the inside diameter of sheath 12 and slides freely within sheath 12. Probe tip 16 is also provided with a rounded tip or blunt end 17 which is used to contact periodontal tissue when a measurement is made. Blunt end 17 is provided so as to minimize the possibility of injury to the tissue. When a measurement is made, blunt end 17 contacts the bottom an anatomical recess, probe tip 16 is pushed into sheath 12 and connector means 14 is pushed backward by bulb 18 of probe tip 16. When end 21 of sheath 12 contacts a reference point such as a tooth where it meets the gum, the point of maximum depression of probe tip 16, the measurement made at that point is recorded.

It will be recognized by those skilled in the art that a number of reference points may be chosen for taking measurements. For example, the reference point for the sheath when taking a measurement, in addition to the gumline, may be the cementum and enamel junction. Alternatively, a stent, an impression of the teeth may be made, similar to those used for teeth mapping, and the stent may be used as a cap that is placed on the teeth when measurements are made, and reference points marked on the stent may be used as the reference point in making periodontal measurements. It is important that all measurements are made at each site using the same reference point.

In one embodiment, measurements made will be automatically recorded when an algorithm recognizes a code which indicates that the probe tip has returned to the zero or rest position after a measurement has been started. In an alternative embodiment, the apparatus may be provided with a foot switch or finger switch which may be triggered by the operator to record a measurement. Such a switch may be used if the operator finds it necessary to do a tactile probe of an area before he records any measurements.

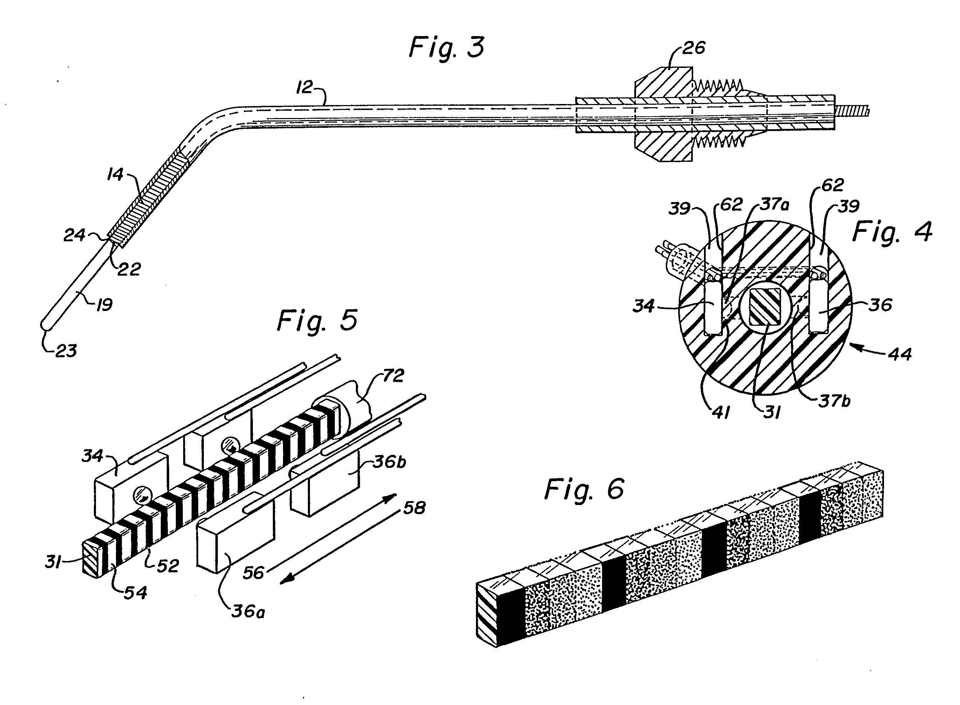

In an alternative embodiment of the invention, as is illustrated in Fig. 3, probe assembly 10 may be provided with a probe tip 19, which is an extension of and attached to connector 14 at connection point 22. In such an embodiment, end 24 of the sheath 12 would have about the same inside diameter as the remainder of sheath 12. Since probe tip 19 is captured by being connected to the extension spring 14, it is preferred that probe tip 19 have about the same but a lesser diameter than the inside diameter of sheath 12. Probe tip 19 is provided with rounded end 23 so that, again, tissue is not damaged when a measurement is being made.

In the embodiment of Figs 1-2, the probe tip will be about 10 to 16 mm long, and preferably about 13 mm long. It has been found that a probe of this length provides good access when a measurement is being taken, and provides good tactile feedback.

The helix or connecting means 14 may have a silver solder tip on each end, and preferably will have a solid metal sleeve on each end to help prevent connecting means 14 from misaligning with the probe tip 16 or the abutting means 32. The probe tip is freely moveable within sheath 12 because it has a diameter substantially less than the inside diameter of the sheath, and because the connecting means 14 can easily negotiate the radius 98 of the gooseneck when it moves within said sheath because of its flexibility. Also, because of its structure, the connecting means 14 has minimal frictional contact with sheath 12 when it moves (because of its small diameter, and because of its coiled structure which reduces friction between sheath 12 and connecting means 14). The connecting means 14 is relatively non-compressible, and accordingly, the movements of the probe tip 16 are translated accurately throughout the length of sheath 12.

An air pressure or spring force loading device is provided with the apparatus which will maintain a pressure in the optical housing 50 that translates to a force at probe tip 16 or 19 which measures about 10 to 100 grams force. Thus, before a measurement is made, because of the pressure within optical housing 50, probe tip 16, for example, will be fully extended from the end of sheath 12. This provides maximum sensitivity for the operator since he may adjust the air pressure within these parameters to one which is most comfortable for him, or for one which is most appropriate for the particular patient being examined.

To illustrate the definition of grams force, ten grams force, for example, is defined as the force required to lift a 10 gram mass. In the most simple method of determining such a force as applied to the present invention, a 10 gram mass is placed over a hole in a plate, the retracted probe tip is placed under the 10 gram mass and the air pressure is adjusted until the 10 gram mass is lifted. Alternatively, a 10 gram mass may be placed on an extended probe tip and the air pressure in the handpiece reduced until the probe tip retracts.

Although the biasing means used in the handpiece of Fig. 1 is ultimately air pressure or spring pressure, for purposes of illustration of all the embodiments described herein, the biasing means will be defined as pressure or resistance means and all moving parts on which the pressure or resistance means directly or indirectly acts, including independantly piston 72, slide 31, abutting means 32, and connecting means 14. Further, air pressure or, for example, a spring, may be defined as active biasing means and all other connecting means may be defined as connecting biasing means.

For making perio measurements, it is preferred that the air pressure or spring pressure used is translated into the range of about 20 to 50 grams force on the probe tip.

In the embodiment of Fig. 1, the air hose will be attached to hand piece 2 at hose 15, and the air pressure will impinge directly on air driven piston 72 of slide carrier 30. Air driven piston 72 and shaft 13 are dimensioned so that air leaks around air piston 72 and follows shaft 13 through connector 14 and sheath 12 and exits handpiece 2 and probe tip assembly 10 around probe tip 16. In the illustrated embodiment, such leakage around probe tip 16 is desirable because the air leakage prevents the air piston from freezing up, which could hinder measurements, and the constant air flow out of sheath 12 helps minimize the introduction of bacteria into sheath 12.

A variable air regulator may be provided to give the operator the air pressure adjustability desired. Providing probe tip 16 with pneumatic control assures that when a measurement is started, probe tip 16 will be fully extended, so that accurate and consistent readings can be obtained.

Thus, the probe assembly of the invention provides a probe with pneumatic control which is smooth, and which maintains tactile sense for the operator. And because the probe tip is extended from the sheath under very low pressure, the probe tip releases easily into the sheath when a measurement is made there by reducing the possibility of injury to the tissue.

In one embodiment of the invention, the probe assembly may be detachable for ease in sterilizing the equipment. Alternatively, the probe tip 16, sheath 12, and connector 14 may be made disposable and discarded after use. In such an embodiment, probe tip 16, sheath 12 and connector 14 collectively may be defined as a probe assembly. Optionally the collet may also be made to be disposable.

As explained below, the apparatus of the present invention is self-calibrating, and differences in dimensions between specific probe tips and connectors will not affect measurements obtained. The calibration can be checked at any point in the sequence. Accordingly, the practitioner may change a probe tip in the middle of a measuring sequence, and the measurements taken will not have to be adjusted.

Referring now to Figs. 1, 4 and 5, also associated with sheath 12 is slide assembly 44 which comprises slide carrier 30, slide 31 and optical housing 50. Slide carrier 30 is freely movable within sheath 13 and has abutting means 32 which may be in contact but separate from connector 14 or may be joined thereto. When a measurement is made, probe tip 16 presses against connector 14 which slides freely within sheath 12 and presses against abutting means 32. The movements of probe tip 16 are thus translated to slide carrier 30 and recorded by slide assembly 44. As connector 14 presses against abutting means 32 of slide carrier 30, slide carrier 30 is pushed in the direction of arrow 56. optical housing 50, which is stationary with respect to sheath 12, is equipped or fitted with electrical means to measure the distance that slide carrier 30 moves.

As illustrated in Figs. 1 and 4, where Fig. 4 is a cross section of the slide assembly 44 taken through line 4-4 of Fig. 1, there are longitudinal slots 39 which are cut into optical housing 50 on a plane parallel to the central axis of optical housing 50 to provide shelf 62 for supporting electrical means in the optical housing 50. A hole 40 is drilled through the optical housing 50 through shelf 62, and through the central axis of the optical housing 50. The point where hole 40 intersects shelf 62 provides a rest 41 in shelf 62 for holding, in the illustrated embodiment, the lenses 37a and 37b, respectively, of light source 34 and light receiving means 36 in place. Preferably dimensions of slot 39 and flexibility of optical housing 50 will permit a snap in fit of light source 34 and light receiving means 36 into slot 39. Hole 40 provides an axis for alignment for light source 34 and light receiving means 36 which causes light to pass from light source 34 through slide 31 to light receiving means 36.

Although illustrated as having two light sources 34 and two light receiving means 36 on opposite sides of slide 31 so that light shines directly through slide 31 to the light receiving means 36, those skilled in the art will recognize that, with proper hardware and algorithms, the apparatus of the invention may be adapted to be used with one light source and one light receiving means on each side of the optical housing, or may be provided with means so that light is reflected through slide 31, and accordingly, light source 34 and light receiving means 36 may be on the same side of optical housing 50, and may be combined in one device.

In the preferred embodiment, slide 31 comprises alternate bands of clear transparent material 54 and opaque material 52. The clear and opaque bands 54 and 52 respectively will be provided by making slide 31 out of photographic film or by making slide 31 using a silk screen process. Such a slide can be made using materials such as, for example, mica or mylar. Measurements are obtained when light transitions between these bands are counted as they pass by a fixed point on optical housing 50.

Referring now to Fig. 5, in the illustrated embodiment the means for counting the bands 52 and 54 as they move by the fixed point on optical housing 50 will be provided by light transmitter 34 and light receiving means 36 which are mounted on opposite sides of optical housing 50 whereby slide 31, in its motion, moves between transmitter 34 and light receiving means 36. Thus, when a measurement is being made, and slide carrier 30 is in motion through optical housing 50, light from transmitter 34 impinges first on an opaque band 52, which does not permit any light to reach light receiving means 36, and then as motion continues the light impinges on clear transparent band 54, which permits light to pass therethrough and impinge on the light receiving means 36. Thus, light receiving means 36 does not transmit a signal when an opaque band 52 is between it and light transmitter 34, but it transmits a signal when clear transparent band 54 moves to a position between the transmitter 34 and receiving means 36 and light passes therethrough.

In the illustrated embodiment, light receiving means 36 is connected by wires to a signal processing system which counts the number of transitions between light and dark that pass by light receiving means 36.

Clear and opaque bands 52 and 54 may be made as narrow as physically possible and still register light transitions on light receiving means 36. Bands 52 and 54 will preferably be from about 0.125 mm to about 0.5 mm wide and in the illustrated embodiment, opaque bands 52 and clear transparent bands 54 of slide 30 will be about 0.25 mm wide and hole 40 will be about 1/16 inch in diameter, and accordingly measurements will be accurate to about plus or minus about 0.125 mm. Accuracy is related to about one-half the width of a band. Accuracy to about 0.5 mm for this type of measurement is generally considered sufficient.

In one embodiment of the slide as illustrated in Fig. 6, bands providing a smooth transition between light and dark may be used. For example, at one point on the band, the band may be clear and transparent, and the bands may become gradually darker as one looks down its length until one reaches a point where the band is opaque.

In the preferred embodiment, light receiving means 36 will be adapted to recognize the direction of movement of slide carrier 30 such as by recognizing from which side of light receiving means 36 light first impinges on light receiving means 36 as slide 30 moves past light transmitter 34. One method of achieving this, using the illustrated embodiment as an example, is to place the two light receiving means 36 non-symmetrically relative to the bands on the slide. For example, when light receiving means 36a is located over the center of an opaque band, light receiving means 36b may be located over a transparent band at a point 1/4 band width from a transition line between an opaque band and a transparent band. When the light receiving means 36a and 36b are so located, when moving in the direction of arrow 56, light receiving means 36a, for example will always cross a transition line 1/4 of a band width before light receiving means 36b. When going in the opposite direction, light receiving means 36b will always cross a transition line 1/4 of a band width before light receiving means 36a. Since there is a voltage drop or voltage increase in the optical detecting system each time a light receiving means crosses a transition line, the software can be adapted to recognize the codes developed when one light receiving means trails the other, and use these codes, together with the count of transition lines crossed, to provide for adding and subtracting the count for providing an accurate measurement. Thus, if slide carrier 30 is moving in the direction of arrow 56, the code developed by the light transition pattern may be indicated in the micro processor as a plus. If, on the other hand, slide carrier 30 is moving in the direction of arrow 58, the code developed by the light transition pattern may be indicated in the micro processor as a minus. Thus, if the operator starts making a measurement and he backs off a little bit, then continues with the measurement, the micro processor will account for these extra movements, subtract any movements that do not add to the measurement, and provide an accurate reading.

Those skilled in the art will recognize that other relationships between the slide transitions and the light receiving means can be used as long as the codes developed by the movement of the slide indicate a recognizable difference between the directions of movement of the slide.

The apparatus of the present invention is also self calibrating. Since it is not important on which particular opaque band 52, or clear transparent band 54 on which the measurement is started, since the system operates by counting the number of transitions between bands that pass by the light source or light transmitter 34 in any given measurement, probe tip assemblies may be changed, and although the probe tip assemblies may have different dimensions, the rest position of slide carrier 30 is adjusted to allow the probe tip to be fully extended because of the biasing means, and because the apparatus continues to count only the change in transitions (as the probe tip moves) on the same slide, there will be no differences in the measurements obtained.

Preferably the slide will be longer than is needed to register movements of probe tip 16, to provide for differences in lengths in the probe tip assemblies, and in the illustrated embodiment will be about 15 to 16 mm in length.

The measurements made using the present invention are accurate, adjustable as to the force required to obtain them, and reproducible.

It will be recognized by those skilled in the art that although an optical system has been described for registering measurements with the probe tip, the probe tip assembly may be used with known electrical means for registering measurements, such as a slide and resistor, or a potentiometer. Other methods of registering the measurements will be apparent to those skilled in the art.

Although, in the illustrated embodiment, wires leading from the handpiece to the microprocessor or other programmable means are used to convey signals relating to the movements of the probe tip electrically, it will be recognized by those skilled in the art that means may be used for conveying signals produced by the movement of the probe tip without the use of wires, for example, by radio signals or infrared, and by other means similar to those used to operate a television remote control.

In the illustrated embodiment, the micro processor is provided with an algorithm which prompts the user and automatically records the depths as measurements are taken. The micro processor is able to keep track of which measurements are being taken, and the operator can take measurements in any order. The data obtained can be interpreted by the micro processor and displayed in both numeric and/or graphic form and the depths obtained by the measurement may be automatically recorded by a switch controlled by the operator. The microprocessor can be attached to peripheral devices which are adapted to display the data obtained instantaneously, such as on an LCD (liquid crystal display), and the data can be saved in memory or on software and a hard copy, such as a printout, may be provided.

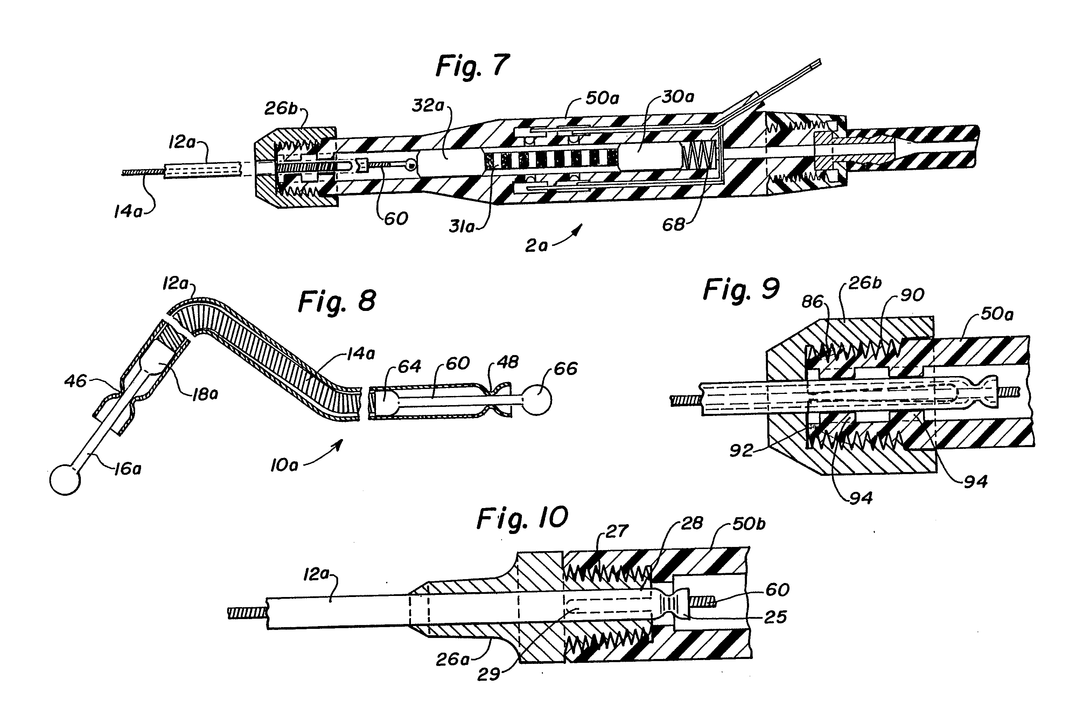

In the embodiment of FIG. 7, it will be noted that spring 68 contacts slide carrier 30a in handle 2a. Spring 68 represents a method of biasing a probe tip 16, 16a or 19, for example, to an extended condition. Those skilled in the art will recognize that, with modifications, a spring biasing means may be used in the embodiment of FIG. 1, and an air biasing means may be used in the embodiment of FIG. 7. Other means of biasing a probe tip to an extended position will be apparent to those skilled in the art. Other various components of each embodiment may interchangeably be used on other embodiments. The embodiments described are illustrative only and are not limiting.

Referring now to FIGS. 7 and 8, the probe tip assembly 10a of the invention, in general, comprises sleeve 12a, connecting biasing means 14a, probe tip 16a and abutment end 60. In an embodiment where it is desired that a collet, for example collet 26a (FIG. 10), be disposable, collet 26a may also comprise a part of the probe tip assembly.

In the illustrated embodiment, probe tip 16a has bulb 18a within sheath 12a which is used to capture probe tip 16a within the sheath when sheath 12a is crimped at crimp 46. Abutting rigid end 60 may comprise bulb 64 and abutting bulb 66 and is captured within sheath 12a at crimp 48. Abutting bulb 66 is adapted for abutting contact with abutting element 32a (see FIG. 7). In the illustrated embodiment connecting biasing means 14a is a helical coil. It is desirable that biasing means 14a be rigidified in some manner at its abutment end 60, and in an alternative embodiment, where the connecting biasing means 14a is a helical coil, for example, a number of twists of the coil at abutment end 60 may be soldered together. Those skilled in the art will recognize that other means may be utilized for providing a connecting biasing means with a rigidified abutment end 60. Those skilled in the are will recognize that other types of connecting biasing means may be used in the invention: for example, a flexible nylon or plastic filament may be used.

Referring now to FIG. 9, in an embodiment of the perio probe wherein probe tip assembly 10a is made to be easily removable, collet 26b will be provided having tapered threads 86 in the inside diameter (I.D.) thereof and handle 50a will have complementary tapered male threads 90 at end 92 to receive collet 26b. End 92 of handle 50a is split and has at least two tabs 94 which are adapted to contact sheath 12a when collet 84 is threaded onto end 92, compressing end 92 to provide frictional engagement with sheath 12a of probe tip assembly 10a. Probe tip assembly 10a is similar to the probe tip in FIG. 1 except that helical coil 14 therein is adapted to abut against abutment means 32a of slide carrier 30a.

Other means of attaching a removable probe assembly to a handle will be apparent to those skilled in the art.

The removable probe tip assembly may be disposable. The use of a disposable probe tip assembly obviates the need to sterilize the probe to avoid contamination between patients since the probe tip assembly will be discarded after use on a single patient.

Referring now to FIG. 10, in a second embodiment of a perio probe wherein a probe tip assembly is adapted to be easily removed from optical housing 50a of handpiece 2a, collet 26a may be made with a tapered threaded male end 28 which is adapted to be threaded into tapered female threads 27 in the end of optical housing 50b. Collet 26a preferably will have a split 29 in threaded end 28 which makes possible the compression of collet 26a into frictional contact with sheath 12a when collet 26a is threaded into optical housing 50b.

When probe tip assembly 10a is attached to optical housing 50b, end 25 of sheath 12a containing rigid end 60 is slid through collet 26a to abut against abutting means 32a of the slide, collet 26a is then tightened to frictionally engage sheath 12a.

Preferably the sheath, probe tip and extension spring of the apparatus will be made of a non corrosive material. Especially preferred materials for the apparatus are non-corrosive metals, and most preferred is stainless steel.

Although those skilled in the art will recognize that the slide, slide carrier and optical housing may have any shape suitable for having a working relationship, in the illustrated embodiment the slide carrier will be cylindrical in shape and the slide will be flat. The optical housing is assembled into the handpiece and the handpiece will have a shape that fits conveniently into the hand. As will be recognized by those skilled in the art, with reference to Fig. 5, the optical housing may be slightly more than half of a cylinder. The handpiece may be made from any suitable material and preferably will be made of plastic.

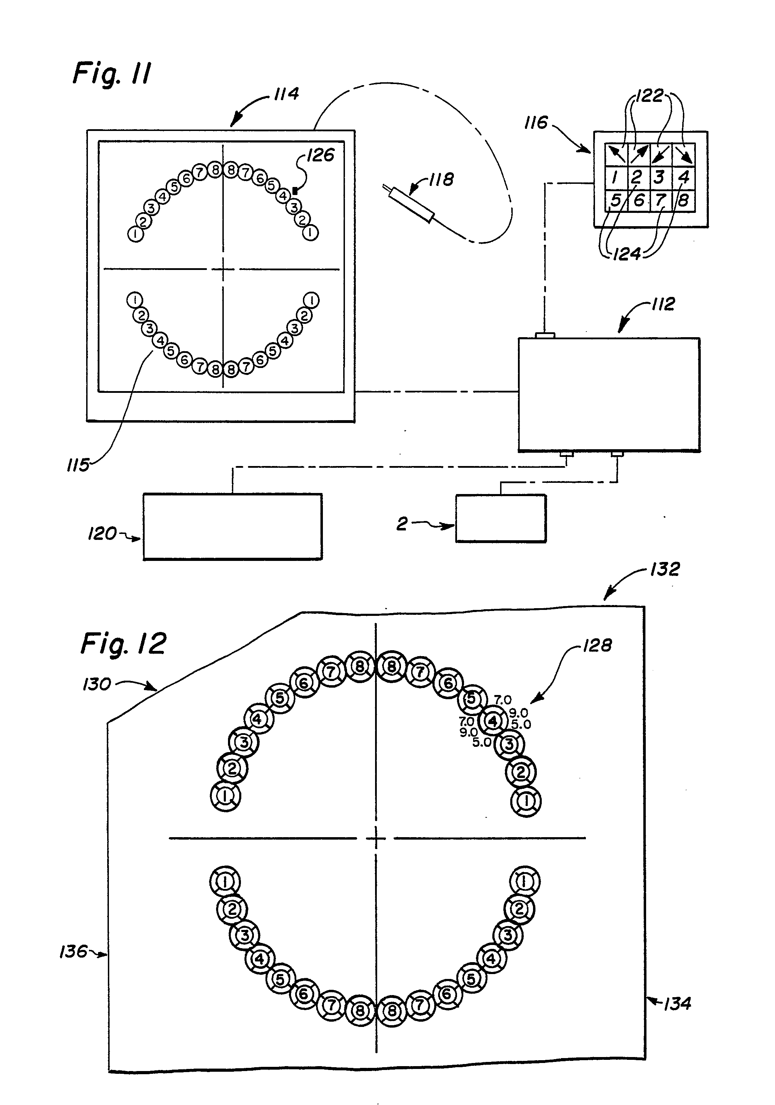

In one possible embodiment of the invention, such as that illustrated in Fig. 11, the entire apparatus may comprise handpiece 2; microprocessor 112 including software for handling input and output data, and memory; display monitor 114 having a graphic display 115 of all possible tooth locations; and input keyboard 116 or alternative light wand or stylus 118 for inputting the tooth number or location of a desired measurement. A printer 120 may be provided for producing a hard copy of the graphic display with the obtained measurements, such as is illustrated in Fig. 12.

In the embodiment of Fig. 11, the keyboard 116 has quadrant keys 122 marked with arrows to represent the upper right, upper left, lower right and lower left quadrants respectively, and numbered keys 124 which can be used to designate a tooth number in the quadrant.

Alternatively, the tooth location of a measurement can be established by touching light wand or stylus 118 to the graphic display, or by simply touching a point on the graphic display with a finger.

Referring now to Fig. 12, graphic display 115 comprises upper left quadrant 130, upper right quadrant 132, lower left quadrant 136 and lower right quadrant 134. An adult has 32 teeth, eight in each quadrant as represented in the Figure. By touching the second quadrant key 116 from the left (Fig. 11), and the key 124 numbered 4, cursor 126 will be placed on monitor screen 114 as indicated in Fig. 11.

When measurements are completed, a graphic illustration of the measurements, such as that represented at 128 in Fig. 12, will provide the practitioner with a permanent record of the measurements taken.

In the method of the invention, when the apparatus is used as a perio probe, the algorithm will be provided which preprograms a set of sites on which measurements can be made by a dentist when measuring the gingival sulci. Preferably, all the possible preprogrammed sites or positions for possible measurement will be displayed on a screen or computer monitor, and interactive means will be provided which permits the operator to choose the sites he wishes to measure. The site may be chosen by placing a cursor on the screen graphic next to the site that is to be measured using a keyboard or by touching the screen. The cursor may then prompt the practitioner until a measurement is made or the cursor is moved. Preferably, the site for measurement is selected by entering the quadrant and the tooth number by keyboard entry. When the operator so chooses a site, the software will automatically jump to the prechosen position so that all parameters associated with that position may be correlated with the measurement that is to be taken. When a measurement is made, the algorithm will be given a signal when the probe tip starts to move, and another signal when the probe tip returns to the zero or rest position, and when a full set of signals have been received, the algorithm will save the maximum change of position by the probe tip in memory, or alternatively may immediately cause a printout of the measurement made, together with all parameters needed to identify the position of the measurement. If saved in memory, all the measurements made may be printed out at one time, together with the parameters identifying the position of the measurement.

The algorithm thus makes it possible for the operator to choose to make measurements only around diseased teeth and to skip measurements around healthy teeth thus avoiding the rigidity often associated with using a preprogrammed set of measurements.

Alternatively, in the case where the practitioner finds it necessary to probe around the teeth to obtain a tactile sense of the condition of the gingival sulcus, he may use a foot switch or a finger switch to trigger a recording of only those measurements that he wants to record.

If desired, the software of the programmable means may be provided with an algorithm that provides for self diagnostics of the probe tip assembly, schematic and other software used in the probing and measuring system.

In the operation of the apparatus, the software provides a calibration check which is adapted to prevent false readings when tissue or other debris causes the probe tip to stick. For example, when the initial calibration is made, the "O" position is established by the full extension of the probe tip relative to the sheath and the full depression position is established by pressing the probe tip as far as it will go into the sheath. This calibration is made only for the purpose of establishing the full range of extension for a particular probe tip since a measurement is dependant only on the number of pulses created by the optical slide during a measurement.

When a measurement is made, the maximum depression of the probe tip is saved in the buffer memory, but the software provides means which prevents the measurement from being permanently saved or printed out if the probe tip does not return to the "O" position after the measurement is made. Instead, if the probe tip does not return to "O", the display provides an error message telling the operator that the probe tip is not functioning properly.

In the illustrated embodiment, the probe tip reads backwards. That is, when the probe tip is in the fully extended position, the display reads the length of the probe tip established by the calibration, e.g. 13 mm. When the probe tip is used in a measurement, when it moves at least 1/4 mm, the display switches to a "O" reading and the measurement thereafter is a direct indication of how far the probe tip enters into the sheath. Since, even where no periodontal disease exists, a reading greater than 1/4 mm will be obtained, this provides a further means of indicating when the probe tip is malfunctioning since the display will not change to "O" if the probe tip is stuck in the extended position.

While present embodiments of the invention have been illustrated and described, it will be recognized by those skilled in the art that the present invention may be otherwise variously embodied and practiced without departing from the scope of the following claims.

## Claims

1. An apparatus for measuring the depth of a recess comprising:

(a) a sheath

(b) conducting biasing means enclosed in said sheath

(c) a handle for holding said sheath during use

(d) active biasing means enclosed in said handle, and

(e) an elongated substantially rigid probe tip in contact with said biasing means, said probe tip being biased substantially at one end of said sheath and extending from said sheath, said probe tip being adapted to be moveable relative to and within said sheath.

2. The apparatus according to Claim 1 which comprises means for measuring and recording the movement of said probe tip relative to said apparatus.

3. The apparatus of Claim 2 which comprises connecting means which connect said measuring means and said probe tip wherein said probe tip, connecting means and measuring means slide freely within said apparatus.

4. The apparatus of Claim 1 in which a probe tip assembly comprising said sheath, conducting biasing means enclosed in said sheath and said probe tip, is adapted to be easily removable from said handle.

5. The apparatus of Claim 3 in which said probe tip has associated therewith a helical coil received in said sleeve, said helical coil being adapted to provide a bias against said probe tip and to minimize friction between said helical coil and said sleeve.

6. The apparatus of Claim 4 in which means for removably attaching said probe assembly to said handpiece comprises a female collet adapted to thread onto the end of said handle thereby compressing the end of said handle to frictionally engage the sheath of said probe assembly.

7. The apparatus of Claim 4 in which means for removably attaching said probe assembly to said handpiece comprises a tapered male collet having a split threaded end adapted to screw into a tapered threaded end of said handle wherein said split threaded end of said collet is compressed to frictionally engage the sheath of said probe assembly.

8. The apparatus of Claim 1 which is adapted for use as a periodontal probe, and wherein said sheath has a gooseneck bend and is thereby adapted for taking recess measurements in the mouth when said probe tip contacts the bottom of an anatomical recess and said sheath establishes a reference point relative to said anatomical recess.

9. The apparatus of Claim 1 in which at least a portion of said probe tip within said sheath is substantially a similar but a lesser diameter than the inside diameter of said sheath, and an air pressure loading device is associated with said sheath and is adapted to maintain a gram force of between about 10 and 100 on said probe tip.

10. The apparatus of Claim 1 in which said sheath, said probe tip, and said connecting means are made of a non-corrosive metal.

11. The apparatus of Claim 1 in which said active biasing means comprises a compression spring.

12. The apparatus of Claim 3 which comprises a slide carrier within said sheath and in contact with said connecting means at an end of said connecting means distal from said probe tip, said slide carrier being adapted to translate the movements of said probe tip as measurements are taken as said movements are transferred to said slide carrier through said connecting means; a slide attached to said slide carrier, said slide having electrical measuring means associated therewith, and said measuring means being adapted to record said movements.

13. The apparatus of Claim 12 in which said slide comprises alternate clear transparent and opaque bands along the length of said slide, and said measuring means comprises a light source attached to an optical housing and a light sensitive receiver means attached to said optical housing and having said slide carrier between said light source and said light receiver means.

14. The apparatus of Claim 13 in which said bands are about 0.125 to 0.5 mm wide.

15. The apparatus of Claim 13 in which said receiver means is adapted to distinguish the direction of movement of said slide relative to said optical housing, and is connected to electronic circuitry which adds and subtracts said movements and totals and retains the maximum movement indicating the depth of an anatomical recess.

16. The apparatus of Claim 15 in which measurements are retained in memory in said microprocessor and can be electronically displayed or as a hard copy in a printout.

17. The apparatus of Claim 1 in which at least a portion of said probe tip within said sheath is substantially a similar but a lesser diameter than the inside diameter of said sheath, and an air pressure loading device is associated with said sheath and is adapted to maintain a gram force of between about 10 and 100 on said probe tip.

18. The apparatus according to Claim 15 in which said electronic circuitry is used in association with software which prompts the user and provides for storage of data.

19. A probe tip assembly comprising
(a) a sheath
(b) a conducting biasing means movable within and captured within said sheath, and
(c) a probe tip captured within said sheath in communication with said biasing means.

20. The probe tip assembly of Claim 19 in which said conducting biasing means has a rigidified end, and said rigidified end is captured within said sheath.

21. The probe tip assembly of Claim 19 in which said sheath is crimped to capture said conducting biasing means.

22. An apparatus for accepting and recording measurements from a measuring device comprising
(a) a slide carrier and a slide having a working relationship with an optical housing wherein said slide is adapted to fit on said slide carrier and said slide carrier is adapted to be moveable relative to said optical housing' wherein said slide comprises alternate bands of clear and opaque material throughout its length
(b) a light source and a light receiving means attached to said optical housing whereby said slide passes between said light source and said light receiving means, and
(c) means for transferring data from said light receiving means to remote means for processing and displaying said data.

23. The apparatus of Claim 22 in which said clear and opaque bands are photographic film.

24. The apparatus of Claim 22 in which said bands are about 0.125 to 0.5 mm wide.

25. The apparatus of Claim 22 in which said receiver means is adapted to distinguish the direction of movement of said slide relative to said optical housing, and is connected to electronic circuitry which adds and subtracts said movements and totals and retains said movements to obtain a measurement.

26. The apparatus according to Claim 22 in which said electronic circuitry is used in association with software which prompts the user and provides for storage of data and is connected to means for providing a display of data or a hard copy of said data.

27. A method for taking and recording measurements comprising the steps of

(a) preprogramming a schematic on computer means to provide a set of sites where measurements are to be taken

(b) providing means for selectively choosing sites for measurements to be taken within said set of preprogrammed sites, in which said means for selectively choosing measurements is user interactive means in which the user has a software interactive display of said preprogrammed sites and comprises the step of choosing the site where a measurement is to be taken by indicating the selected site on said display.

28. The method according to Claim 27 in which means for indicating said selected site is cursor means.

29. The method according to Claim 27 which comprises the step of automatically recording a measurement when the probe tip returns to the zero position after a measurement is initiated.

30. A method for obtaining a measurement comprising the steps of

(a) providing physical means adapted to convert a physical measurement into a readable form

(b) providing data handling means for prompting and for interpreting, storing and outputting data obtained from said physical means in which said data handling means has preprogrammed therein a number or series of possible measurement sites to be measured by said physical means and said data handling means has interactive display means for displaying said preprogrammed measurement sites

(c) choosing said measurement site by indicating the position of said site on said display means

(d) moving said physical means to a preselected site and obtaining a measurement and

(e) storing and/or outputting said obtained measurement.

31. The method of Claim 30 in which said interactive display means comprises a computer monitor having a graphic display of possible measurement sites and means for indicating a site chosen for measurement on said display.

32. The method of Claim 30 in which said data handling means is adapted to interpret the difference between positive and negative movements of said physical means in order to obtain an absolute difference between a zero condition of said physical means and a maximum condition of said physical means corresponding to a measurement obtained, wherein extraneous movements between said zero and maximum conditions are interpreted and substracted to obtain said absolute difference.

33. The method of Claim 30 wherein said data handling means interprets data obtained by counting transitions between transparent and opaque bands in an optical reader which is activated when a measurement is obtained.

34. The method of Claim 33 which comprises the step of zeroing said data handling means by resetting to zero a digital interpretation of the status of said physical means when said physical means is in a premeasurement position and said zeroing comprises calibration of said data handling means and physical means.

35. The method of Claim 31 in which said interactive display means comprises a cursor which can be moved randomly on said graphic display to choose a measurement site.

36. The method of Claim 31 in which said interactive display means comprises a light guide which can be used to touch the graphic display on a computer monitor to indicate a chosen measurement site.

37. A method for preventing a false reading during the taking of a measurement comprising including in software associated with the taking of said measurement means adapted to provide an error message if a measuring device used to obtain said measurement does not function in a manner which is anticipated by said software in the programming thereof.

38. The method of Claim 37 in which said measuring device is a perio probe and said error message is produced when a probe tip of said perio probe does not return to a "O" position relative to a sheath on said perio probe.

E4-6465

Fig. I

Fig. 2

Fig. 3

Fig. 4

Fig. 5

Fig. 6

Fig. 7

Fig. 8

Fig. 9

Fig. 10

EP 0 296 520 A2

*Fig. 11*

*Fig. 12*